# EUROPÄISCHE PATENTSCHRIFT

(11) **EP 1 678 373 B1**
(45) Veröffentlichungstag und Bekanntmachung des Hinweises auf die Patenterteilung: **18.07.2007**
(21) Anmeldenummer: 04790916.3
(22) Anmeldetag: 27.10.2004
(51) Int. Cl.: D21B 1/32, B03B 13/02, B03D 1/14

(54) **VERFAHREN ZUR WEISSEREGELUNG FÜR DIE DRUCKFARBENENTFERNUNG IN DEINKING-ANLAGEN UND EINE DEINKING-ANLAGE MIT EINER FLOTATIONSZELLE ZUR DRUCKFARBENENTFERNUNG**
METHOD FOR REGULATING WHITENESS FOR REMOVAL OF PRINTING INK IN DEINKING INSTALLATIONS AND DEINKING INSTALLATION COMPRISING A FLOTATION CELL FOR REMOVAL OF PRINTING INK
PROCEDE DE REGULATION DU BLANC POUR L'ELIMINATION DES COULEURS D'IMPRESSION DANS DES INSTALLATIONS DE DESENCRAGE, ET INSTALLATION DE DESENCRAGE COMPORTANT UNE CELLULE DE FLOTTATION POUR L'ELIMINATION DES COULEURS D'IMPRESSION

(30) Priorität: 27.10.2003 DE 10350073
(43) Veröffentlichungstag der Anmeldung: 12.07.2006
(73) Patentinhaber: SIEMENS AKTIENGESELLSCHAFT, 80333 München (DE)
(72) Erfinder: DINKEL, Markus, 87745 Eppishausen (DE); GÖTZ, Reinhold, 91054 Erlangen (DE); PALM, Rainer, 80337 München (DE); RUNKLER, Thomas, 81929 München (DE); SCHMIDT, Thomas, 86842 Türkheim (DE); VILLFORTH, Klaus, 64342 Seeheim-Jugenheim (DE)
(86) Internationale Anmeldenummer: PCT/EP2004/012141
(87) Internationale Veröffentlichungsnummer: WO 2005/042831

(56) Entgegenhaltungen:
- EP-A- 1 186 706
- EP-A- 1 262 593
- EP-A- 1 388 370
- EP-A- 1 457 597
- US-A- 5 622 597
- US-A- 5 840 156

## Beschreibung

Die Erfindung betrifft ein Verfahren zur Weißeregelung für die Druckfarbenentfernung in Deinking-Anlagen. Weiterhin betrifft die Erfindung eine Deinking-Anlage mit einer Flotationszelle, in der Druckfarbe aus einer Faserstoffsuspension entfernt wird.

Ein wichtiger Prozessschritt beim Recycling von Altpapier ist die Druckfarbenentfernung. Dazu wird zunächst aus dem bereitgestellten Altpapier eine Faserstoffsuspension hergestellt und diese in eine Flotationszelle geleitet. Beim sogenannten Flotations-Deinking strömen Luftblasen durch die Faserstoffsuspension, an die sich durch Adhäsionseffekte Druckfarbenpartikel anlagern, die mit dem sich auf der Oberfläche der Faserstoffsuspension in der Flotationszelle bildende Schaum ausgetragen werden. Die aus der Flotationszelle entnommene, gereinigte Faserstoffsuspension wird Akzept genannt.

Die Weiße des Akzepts bestimmt die Weiße des am Ende der Altpapieraufbereitung hergestellten fertigen Papiers. Der Wert der Weiße ist in engen Grenzen vorgegeben. Um die Zielweiße des fertigen Papiers in diesen Grenzen zu halten, muss die Druckfarbenentfernung in dem Deinking-Prozess eingestellt werden, um eine möglichst gleichbleibende Akzept-Weiße zu erhalten. Diese Einstellung wird im Wesentlichen durch die folgenden Aspekte erschwert:
1. Der Sollwert der Regelung bezieht sich auf die Weiße des fertigen Papiers, die vorab im Labor an aufwendig hergestellten Probeblättern gemessen wird. Die Druckfarbenentfernung ist jedoch nur ein Schritt in der Aufbereitungskette. Tatsächlich vergehen viele Stunden zwischen dem Eintrag des Altpapiers, bzw. der Reinigung in der Flotationszelle und der Papierherstellung, so dass sich eine Änderung der Weiße erst nach einer erheblichen Durchlaufzeit bei der Akzept-Weiße des Altpapiers auswirkt.
2. Die Durchlaufzeiten der Faserstoffsuspension durch die Druckfarbenentfernung beträgt etwa 10 bis 30 Minuten. Daher kann eine Regelung bezüglich des Resultats der Druckfarbenentfernung, d.h. des Akzepts, nur langsam reagieren.
3. Der Prozess der Druckfarbenentfernung unterliegt sehr stark den Störungen, die im Wesentlichen durch die schwankende Zusammensetzung des Rohstoffs Altpapier verursacht werden. Diese Zusammensetzung ist zeitnah praktisch nicht sensorisch erfassbar oder steuerbar.
4. Der Wertebereich der Stellgrößen ist aus technologischen Gründen stark eingeschränkt, wodurch die erreichbare Regelgüte begrenzt ist.

Aufgrund dieser Schwierigkeiten werden Deinking-Anlagen bisher ungeregelt betrieben. Dazu werden die Betriebsparameter der Anlage fest eingestellt und diese nur gelegentlich manuell aufgrund von Erfahrungswerten im laufenden Betrieb geändert.

Aus der europäischen Patentanmeldung EP 1 262 593 A1 ist ein Verfahren zur Entfernung von Störstoffen, z.B. Druckfarben oder Stickies, aus einer wässrigen Papierfasersuspension mittels zwei Flotationsstufen bekannt, wobei der Flotationsschaum der ersten Flotationsstufe in den Zulauf der zweiten Flotationsstufe geführt wird. Dabei wird der Durchlauf der zweiten Flotationsstufe aufgeteilt in einen Vorlaufanteil und einen Rücklaufanteil, wobei die Menge des Vorlaufanteils gesenkt wird, wenn der Weißgrad des Gutstoffes erhöht werden soll, wobei das Niveau in den eine Flotationsstufe bildenden Flotationszellen zur Regelung der Menge des abgeführten Flotationsschaumes eingestellt wird, wobei das Schaumniveau in der Schaumrinne der eine Flotationsstufe bildenden Flotationszellen zur Regelung der Menge des abgeführten Flotationsschaumes eingestellt wird. Dabei erfolgt die Niveaueinstellung durch Ansteuerung eines den Durchlauf beeinflussenden Stellventils.

Die europäische Patentanmeldung EP 1 186 706 A2 beschreibt ein Verfahren zur Durchführung eines der Faser- oder Papierherstellung dienenden Flotations-, Bleiche- und/oder Dispergierprozesses unter Anwendung einer oder mehrerer Verfahrensstufen, in denen durch vorgebbare chemische und physikalische Abläufe definierte Prozessschritte durchgeführt und Prozessoptimierungen in Abhängigkeit von Messwerten und daraus gebildeten Kenngrößen, ggf. unter Verwendung von Zustandsmodellen, vorgenommen werden, wobei die Anwendung eines solchen Verfahrens, insbesondere bei der Regelung einer Flotationsanlage, vorgeschlagen wird, um diese, insbesondere im Hinblick auf eine Konstanthaltung der Qualität, z.B. Weißegrad, zu optimieren.

Es ist Aufgabe der vorliegenden Erfindung, ein Verfahren zur Weißregelung zur Druckfarbenentfernung in Deinking-Anlagen sowie eine Deinking-Anlage zur Verfügung zu stellen, in der die Weiße des Akzeptflusses einstellbar ist.

Diese Aufgabe wird durch das Verfahren nach Anspruch 1 sowie durch die Deinking-Anlage nach Anspruch 10 gelöst.

Weitere vorteilhafte Ausgestaltungen der Erfindung sind in den abhängigen Ansprüchen angegeben.

Gemäß einem ersten Aspekt der vorliegenden Erfindung ist ein Verfahren zur Weißregelung der Druckfarbenentfernung in Deinking-Anlagen vorgesehen. Dabei werden Druckfarbenpartikel in einer Faserstoffsuspension in einer Flotationszelle mit Hilfe von Gasblasen ausgetragen. Das Austragen wird durch Abführen des sich bildenden Schaums in eine Schaumrinne durchgeführt. Dabei wird zunächst eine Zulauf-Weiße der zugeführten Faserstoffsuspension gemessen und anschließend eine Stellgröße als Funktion der Zulauf-Weiße und eines vorgegebenen Sollwerts für eine Akzept-Weiße der abgeführten Faserstoffsuspension aus der Flotationszelle ermittelt. Die Menge des abgeführten Schaums wird abhängig von der Stellgröße eingestellt.

Das erfindungsgemäße Verfahren bietet die Möglichkeit, die Akzept-Weiße der abgeführten Faserstoffsuspension zu steuern, indem die Zulauf-Weiße z.B. mit Hilfe von Sensoren ermittelt wird und aus dem Wert der Zulauf-Weiße und des vorgegebenen Sollwerts für eine Akzept-Weiße eine Stellgröße errechnet oder bestimmt wird. Die Stellgröße bestimmt die Menge des abgeführten Schaums in die Schaumrinne an der Flotationszelle. Das erfindungsgemäße Verfahren hat den Vorteil, dass die Akzept-Weiße geregelt werden kann, so dass diese unabhängiger von der Qualität der zugeführten Faserstoffsuspension ist.

Die Menge des abgeführten Schaums kann durch das Einstellen eines Schaumrinnenniveaus, insbesondere mit Hilfe einer Schaumrinnenniveauregelung durchgeführt werden. Das Schaumrinnenniveau gibt die Höhe des ausgetragenen Schaums in der Schaumrinne an. Die Schaumrinne ist ein Auffangbehälter neben der Flotationszelle, aus der Schaum über eine Überlaufschwelle in die Schaumrinne fließt. Das Einstellen des Schaumrinnenniveaus stellt eine besonders einfache Möglichkeit dar, die Menge der aufgetragenen Druckfarbenpartikel aus der Faserstoffsuspension in der Flotationszelle festzulegen. Insbesondere findet die Regelung des Schaumrinnenniveaus über die Steuerung der Ablaufmenge von Faserstoffsuspension aus der Flotationszelle statt. Bei gleichbleibendem Zufluss von Faserstoffsuspension in die Flotationszelle wird somit die Menge des abzuführenden Schaums durch die Menge der aus der Flotationszelle entnommenen Faserstoffsuspension bestimmt. Die Höhe des Schaums in der Schaumrinne bestimmt die Menge des abgeführten Schaums. Ist das Schaumrinnenniveau hoch, so fließt eine große Menge von Schaum aus der Flotationszelle in die Schaumrinne pro Zeiteinheit; ist das Schaumrinnenniveau niedrig, so fließt eine niedrige Menge von Schaum aus der Flotationszelle in die Schaumrinne.

Es kann vorgesehen sein, dass Parameter der Faserstoffsuspension gemessen werden, wobei die Stellgröße als Funktion der Parameter der Faserstoffsuspension in der Flotationszelle ermittelt wird. Dadurch lässt sich eine präzisere Steuerung der Akzept-Weiße durchführen, da insbesondere die Schaumbildung, d.h. die Menge des sich bildenden Schaums, von den Parametern, wie beispielsweise der Viskosität der Faserstoffsuspension abhängt.

Vorzugsweise wird die Stellgröße anhand eines funktionalen Zusammenhangs und / oder anhand einer Look-Up-Tabelle ermittelt.

Erfindungsgemäß wird die Akzept-Weiße der aus der Flotationszelle abgeführten Faserstoffsuspension gemessen, wobei mit dem Sollwert für die Akzept-Weiße ein Regelungswert ermittelt wird, mit dem die Stellgröße beaufschlagt wird, um eine Abweichung der Akzept-Weiße von dem Sollwert auszugleichen. Dadurch wird ein Regelungsverfahren zur Verfügung gestellt, mit dem Fehler der Steuerung ausgeglichen werden können. Insbesondere ist vorgesehen, dass der Regelungswert mit Hilfe einer PI-Regelung ermittelt wird.

Es kann weiterhin vorgesehen sein, dass die Stellgröße mit einem oder mehreren Adaptionswerten beaufschlagt wird. Die Adaptionswerte können in einem Adaptionsverfahren abhängig von der Zulauf-Weiße, der Akzept-Weiße und / oder den Stoffparametern ermittelt werden und dienen dazu, dass Steuerungsverfahren, mit dem die Akzept-Weiße der abgeführten Faserstoffsuspension eingestellt werden soll, fein einzustellen. Insbesondere kann die Adaption durchgeführt werden, indem ein Offset zwischen dem Sollwert der Akzept-Weiße und der gemessenen Akzept-Weiße aufintegriert wird und zur Stellgröße addiert wird.

Gemäß einem weiteren Aspekt der vorliegenden Erfindung ist eine Deinking-Anlage mit einer Flotationszelle zur Druckfarbenentfernung vorgesehen. Sie weist eine Zuleitung auf, um eine Faserstoffsuspension in die Flotationszelle zu leiten. Es ist ferner eine Akzeptleitung vorgesehen, um die Faserstoffsuspension aus der Flotationszelle zu leiten. Eine Schaumrinne dient zum Aufnehmen von Schaum, der durch das Auftragen von Druckfarbenpartikeln aus der Faserstoffsuspension mit Hilfe von Gasblasen entseht, wobei die Menge des abgeführten Schaums einstellbar ist. Es ist ein Zulauf-Weiße-Sensor vorgesehen, um die Zulauf-Weiße der Faserstoffsuspension zu messen. Es ist eine Steuerung vorgesehen, um eine Stellgröße als Funktion der gemessenen Zulauf-Weiße und eines vorgegebenen Sollwertes für eine Akzept-Weiße der abgeführten Faserstoffsuspension zu ermitteln und die Menge des abgeführten Schaums abhängig von der Stellgröße einzustellen.

Die erfindungsgemäße Deinking-Anlage hat den Vorteil, dass die Weiße des Akzepts gemäß einer Steuerung eingestellt werden kann, um eine möglichst gleich bleibende Qualität der gereinigten Faserstoffsuspension für die Papierherstellung zu gewährleisten.

Vorzugsweise ist ein Sensor vorgesehen, um einen oder mehrere Parameter der Faserstoffsuspension zu messen, wobei die Stellgröße als Funktion des oder der Parameter von der Steuerung ermittelt wird. Auf diese Weise kann die Beeinflussung des Schaumaustrags durch Parameter wie beispielsweise der Viskosität entsprechend bei der Ermittlung der Stellgröße berücksichtigt werden, so dass die Menge des abgeführten Schaums abhängig von den Stoffparametern eingestellt werden kann.

Vorzugsweise ist die Menge des abgeführten Schaums über das Schaumrinnenniveau einstellbar. Dazu ist eine Schaumrinnenniveauregelungseinheit vorgesehen, um das Schaumrinnenniveau durch Regelung eines Akzeptflusses durch die Akzeptleitung gemäß einem Sollschaumrinnenniveau einzuregeln. Mit Hilfe der Schaumrinnenniveauregelungseinheit ist es somit möglich, auf einfache Weise durch Steuerung des Flusses durch die Akzeptleitung die Menge des abgeführten Schaums in die Schaumrinne einzustellen.

Erfindungsgemäß weist die Deinking-Anlage eine Weiße-Regelungseinheit auf, um einen Regelungswert abhängig von der Soll-Akzept-Weiße und der gemessenen Akzept-Weiße zu generieren und um die Stellgröße mit dem Regelungswert zu beaufschlagen. Auf diese Weise kann die Steuerung verfeinert werden, durch einen Regelungswert, der abhängig von der Abweichung zwischen der gemessenen Akzept-Weiße und der gewünschten Soll-Akzept-Weiße ist.

Es ist eine Adaptionseinheit vorgesehen, um einen Adaptionswert abhängig von der Abweichung von der Soll-Akzept-Weiße und der gemessenen Akzept-Weiße zu generieren und um die Stellgröße mit dem Adaptionswert zu beaufschlagen. Die Adaptionseinheit dient dazu, die Steuerung während des laufenden Betriebs zu justieren, wenn beispielsweise die gemessene Akzept-Weiße von der zu erwartenden Akzept-Weiße abweicht. Dazu generiert die Adaptionseinheit Adaptionswerte, die mit der Stellgröße verrechnet werden.

Insbesondere ist die Adaptionseinheit so gestaltet, um einen Adaptionswert zu generieren, in dem ein Offset zwischen dem Sollwert der Akzept-Weiße und der gemessenen Akzept-Weiße aufintegriert wird und zur Stellgröße addiert wird.

Bevorzugte Ausführungsformen der Erfindung werden im Folgenden anhand der beigefügten Zeichnungen näher erläutert. Es zeigen:
Figur 1 ein Blockschaltbild einer Anlage zur Altpapieraufbereitung;
Figur 2 einen Querschnitt durch eine Flotationszelle;
Figur 3 ein Blockschaltbild einer Deinking-Anlage mit einer Steuerung gemäß einer ersten Ausführungsform der Erfindung;
Figur 4 ein Blockschaltbild einer Deinking-Anlage mit einer Steuerung und einer Regelung gemäß einer zweiten Ausführungsform der Erfindung; und
Figur 5 ein Blockschaltbild einer Deinking-Anlage mit einer Steuerung, Regelung und einer Adaptionseinheit gemäß einer dritten Ausführungsform der Erfindung.

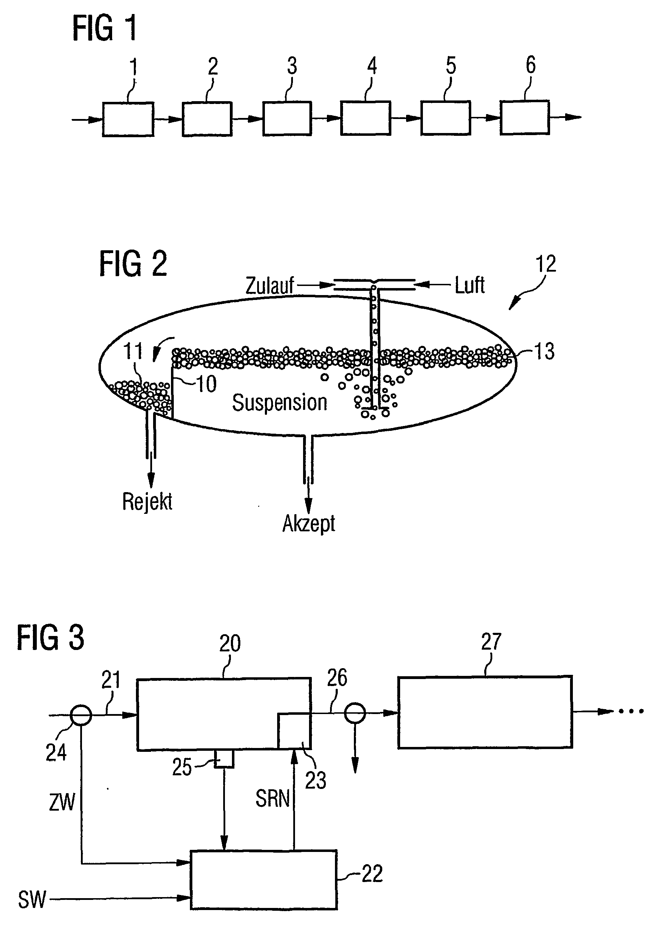

In Figur 1 ist ein Blockdiagramm einer Anlage zur Altpapieraufbereitung dargestellt. In einem Pulper 1 wird Altpapier in Wasser aufgelöst und dadurch eine Faserstoffsuspension erzeugt. Das Auflösen des Altpapiers erfolgt zumeist chargenweise, wobei jedoch die so erzeugte Faserstoffsuspension in den nachfolgenden Prozessschritten kontinuierlich zugeführt wird.

In einem Reiniger 2 werden grobe Verunreinigungen aus der Faserstoffsuspension entfernt. Dies erfolgt üblicherweise durch ein Zentrifugalfeld, mit dem schwere Teilchen, wie beispielsweise Metallklammern aus der Faserstoffsuspension entfernt werden können.

Die Faserstoffsuspension wird durch Flotationszellen 3 geleitet und mit Gasblasen durchsetzt. Üblicherweise werden mehrere Flotationszellen 3 hintereinander angeordnet, wobei die Faserstoffsuspension diese Flotationszellen nacheinander durchläuft. In den Flotationszellen 3 wird die Faserstoffsuspension mit Luftblasen angereichert, wodurch sich aufgrund von Adhäsionseffekten Druckfarbenpartikel an die Luftblasen anlagern und mit ihnen an die Oberfläche der Faserstoffsuspension getragen werden. An der Oberfläche bildet sich ein schwarzer Schaum (Rejekt), der entfernt und stofflich oder thermisch verwertet wird. Die verbleibende Faserstoffsuspension (Akzept) wird an einen Disperger 4 weitergeleitet.

In dem Disperger 4 werden die in der Faserstoffsuspension verbliebenen Druckfarbenpartikel zerkleinert, so dass sie für das Auge nicht mehr sichtbar sind.

Danach wird in einer Bleicheinrichtung 5 die Faserstoffsuspension gebleicht, um die Weiße zu erhöhen, so dass in der Papiermaschine 6 nachfolgend aus der Faserstoffsuspension Papier hergestellt werden kann. Vielfach werden die Prozessschritte der Flotation, der Dispergierung und der Bleiche mehrfach hintereinander ausgeführt.

In Figur 2 ist eine Flotationszelle 12 schematisch im Querschnitt dargestellt. Die Faserstoffsuspension wird mit Luft versetzt und so in die Flotationszelle 12 geleitet, dass sich als Schaum 13 die Druckfarbenpartikel an die Luftblasen anlagern können und sich somit an der Oberfläche der Faserstoffsuspension in der Flotationszelle sammeln. Die Flotationszelle weist eine Überlaufschwelle 10 auf, über die der ausgetragene Schaum 13 in eine Schaumrinne 11 fließen kann und von dort abgeführt wird. Somit wird ein Teil der Faserstoffsuspension mit dem Schaum 13 als Rejekt abgeführt und ein anderer Teil als Akzept aus der Flotationszelle 12 abgeleitet.

Der Wirkungsgrad der Flotationszelle 12, d.h. das Maß an Druckfarbe, das mit den Luftblasen ausgetragen wird, hängt nichtlinear von zahlreichen verschiedenen Prozessparametern ab, z.B. von den Volumenströmen im Zulauf, Akzept und Rejekt, von der Faserstoffzusammensetzung, von den optischen Eigenschaften der Faserstoffsuspension, von der Stoffdichte im Zulauf und vom Fein- und Füllstoffgehalt der Suspension. Wegen dieser vielfältigen Abhängigkeiten ist es Stand der Technik, Flotationszellen mit konstanter Einstellung zu betreiben.

Üblicherweise wird das Schaumrinnenniveau, d.h. die Höhe des Schaums in der Schaumrinne, konstant auf ein Sollschaumrinnenniveau eingeregelt. Die Einstellung erfolgt über ein Stellventil (nicht gezeigt), das den Akzeptfluss so einstellt, dass das Schaumrinnenniveau konstant bleibt. Der Nachteil dieses Konzepts ist es, dass bei guter Eintragsqualität zu viel und bei schlechter Eintragsqualität zu wenig Rejekt produziert wird. Dies führt zu starken Schwankungen in der Akzeptqualität.

In Figur 3 ist ein Blockdiagramm einer (auf Sollweiße gesteuerten) Deinking-Anlage mit einer Flotationszelle dargestellt. Die Flotationszelle 20 der Deinking-Anlage weist einen Zulauf 21 auf, über den Faserstoffsuspension in die Flotationszelle 20 geleitet wird, und einen Ablauf 26, über den der Akzept zu nächsten Prozessschritten 27 geleitet wird. Am Zulauf 21 ist ein Zulauf-Weiße-Sensor 24 angebracht, der die Zulauf-Weiße der der Flotationszelle 20 zugeführten Faserstoffsuspension bestimmt und diese einer Steuereinheit 22 zur Verfügung stellt.

Die Zulauf-Weiße ZW wird mit einer Soll-Weiße SW verglichen, die ebenfalls der Steuereinheit 22 zur Verfügung gestellt wird. Die Steuereinheit 22 generiert daraus eine Stellgröße SRN, mit der die Menge des ausgetragenen Schaums in der Flotationszelle 20 eingestellt werden kann. Die Stellgröße SRN dient als Sollvorgabe für die Regelung des Schaumrinnenniveaus, welches wiederum die Menge des ausgetragenen Schaums bestimmt. Wird ein hohes Schaumrinnenniveau vorgegeben, ist die Menge des ausgetragenen Schaums groß; wird ein niedriges Schaumrinnenniveau vorgegeben, ist sie niedrig.

Die Einstellung des durch die Stellgröße SRN vorgegebenen Schaumrinnenniveaus wird von einer im Wesentlichen unabhängigen Schaumrinnenniveauregelungseinheit 23 durchgeführt, indem der jeweils als Stellgröße SRN vorgegebene Wert als derjenige Wert angenommen wird, auf den das Schaumrinnenniveau konstant geregelt werden soll.

Der Zulauf-Weiße-Sensor 24 zur Detektion der Zulauf-Weiße kann über den Reflektionsfaktor der Faserstoffsuspension bei verschiedenen Wellenlängen, insbesondere bei einer Schwerpunktswellenlänge von 457 nm gemessen werden. Dazu werden die Reflektionen bei verschiedenen Wellenlängen von Leuchtdioden, insbesondere in den Wellenlängenbereichen der Farben rot, grün, blau und infrarot gemessen. Aus den so bestimmten Reflektionswerten kann der aktuelle Wert der Zulauf-Weiße bestimmt werden.

Darüber hinaus erhält die Steuereinheit 22 über einen oder mehrere Sensoren 25, die an der Flotationszelle 20 angeordnet sind, weitere Messwerte, die beispielsweise die Füllstände der Flotationszellen 20, die Flüsse zwischen den Flotationszellen 20 bei mehreren Flotationszellen 20 sowie weitere Parameter, insbesondere Stoffparameter bestimmen und diese der Steuereinheit 23 zur Verfügung stellen. Auf der Basis dieser Werte berechnet die Steuereinheit 22 (z.B. mit Hilfe eines datenbasierten Modells) die optimalen Einstellungen für den Betrieb der Flotationszelle 20. Das Ermitteln der geeigneten Stellgröße SRN kann mit Hilfe eines funktionalen Zusammenhangs zwischen der Zulauf-Weiße und den gemessenen Parametern als auch mit Hilfe einer implementierten Lookup-Tabelle durchgeführt werden.

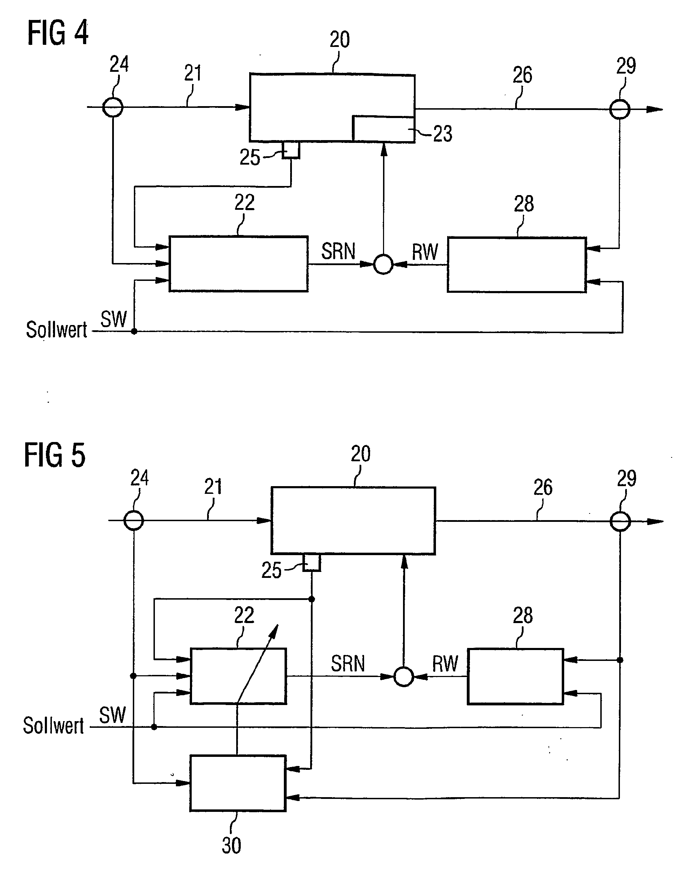

In Figur 4 ist ein Blockschaltbild einer weiteren Ausführungsform einer (auf Sollweiße geregelten) Deinking-Anlage dargestellt. Gleiche Bezugszeichen entsprechen gleichen Funktionseinheiten.

Zusätzlich zur Steuereinheit 22, wie sie in Figur 3 dargestellt ist, ist eine Regelungseinheit 28 vorgesehen, die anhand der Akzept-Weiße, d.h. der Weiße der Faserstoffsuspension im Ablauf aus der Flotationszelle 20, mit der Soll-Weiße SW, d.h. dem Sollwert der Akzept-Weiße, der der Steuereinheit 22 zur Verfügung gestellt worden ist, einen Regelungswert RW ermittelt. Die Stellgröße SRN wird mit dem Regelungswert RW beaufschlagt. Dabei kann der Regelungswert RW addiert, multipliziert oder auf sonstige Weise mit der Stellgröße verrechnet werden. Die Regelungseinheit 28 generiert den Regelungswert RW so, dass bei einer Abweichung zwischen der Akzept-Weiße und der Soll-Weiße ein Regelungswert RW als Korrekturwert ermittelt wird, der die Größen der Stellgröße SRW anpasst, um das Schaumrinnenniveau so einzustellen, dass die Akzept-Weiße in Richtung der Soll-Weiße verändert wird.

Die Akzept-Weiße wird durch einen Akzept-Weiße-Sensor 29 ermittelt, der im Wesentlichen gleichartig zu dem Zulauf-Weiße-Sensor 24 betrieben wird und einen Wert der Weiße des Akzepts an die Regelungseinheit 28 liefert.

Die Regelungseinheit 28 ist vorzugsweise als PI-Regler ausgebildet und kann über eine Totzeitkompensation verfügen, die die Durchlaufzeit der Faserstoffsuspension durch die Flotationszelle berücksichtigt.

In Figur 5 ist zusätzlich zur Steuereinheit und zur Regelungseinheit gemäß der Ausführungsform der Figur 4 eine Adaptionseinheit hinzugefügt, die Adaptionswerte generiert, mit deren Hilfe das in der Steuereinheit integrierte Systemmodell modifiziert werden kann. Die Adaptionseinheit erhält von dem Zulauf-Weiße-Sensor 24 die Zulauf-Weiße, von den Sensoren 25 Werte von Parametern in der Flotationszelle 20, sowie von dem Akzept-Weiße-Sensor 29 die Akzept-Weiße. Daraus wird einer oder mehrere Adaptionswerte ermittelt, mit denen das in der Steuereinheit 22 implementierte Modell beaufschlagt wird.

Die Adaptionseinheit 30 kann gemeinsam mit der Steuereinheit 22 implementiert sein und vielfältige Adaptionsverfahren wie beispielsweise eine Fuzzy-Adaption, eine Adaption mit neuronalen Netzen oder ähnlichem beinhalten. Die Adaptionseinheit 30 berücksichtigt vorzugsweise die Durchlaufzeit der Faserstoffsuspension durch die Flotationszelle und ist im Wesentlichen so gestaltet, langfristige bzw. dauerhafte Abweichungen zwischen der gewünschten und gemessenen Akzept-Weiße auszugleichen. Die Adaption kann beispielsweise erfolgen, indem entweder das Modell verändert wird, oder indem ein Offset zwischen der Soll-Akzept-Weiße und der gemessenen Akzeptweise aufintegriert wird und zur Stellgröße hinzuaddiert wird.

## Patentansprüche

1. Verfahren zur Weißregelung für die Druckfarben-Entfernung in Deinking-Anlagen, wobei Druckfarbenpartikel in einer Faserstoffsuspension in einer Flotationszelle (20) mit Hilfe von Gasblasen ausgetragen werden, wobei das Austragen über das Abführen des sich bildenden Schaums in eine Schaumrinne durchgeführt wird, wobei die Menge des abgeführten Schaums eingestellt wird, mit folgenden Schritten:
- Messen einer Zuläuf-Weiße der zugeführten Faserstoffsuspension;
- Messen einer Akzept-Weiße der abgeführten Faserstoffsuspension;
- Ermitteln einer Stellgröße als Funktion der Zulauf-Weiße und eines vorgegebenen Sollwertes für eine Akzept-Weiße der abgeführten Faserstoffsuspension;
- Ermitteln eines Regelungswertes abhängig von dem Sollwert für die Akzept-Weiße und der gemessenen Akzept-Weiße der abgeführten Faserstoffsuspension;
- Beaufschlagen der Stellgröße mit dem Regelungswert, um ein Abweichen der Akzept-Weiße von dem Sollwert auszugleichen;
- Einstellen der Menge des abgeführten Schaums abhängig von der Stellgröße.

2. Verfahren nach Anspruch 1, wobei die Menge des abgeführten Schaums durch das Einstellen eines Schaumrinnenniveaus, insbesondere mit Hilfe einer Schaumrinnenniveauregelung durchgeführt wird.

3. Verfahren nach Anspruch 2, wobei das Schaumrinnenniveau über die Steuerung der Ablaufmenge von Faserstoffsuspension aus der Flotationszelle (20) eingestellt wird.

4. Verfahren nach einem der Ansprüche 1 bis 3, wobei Parameter der Faserstoffsuspension gemessen werden und wobei das Ermitteln der Stellgröße als Funktion der Parameter der Faserstoffsuspension in der Flotationszelle (20) durchgeführt wird.

5. Verfahren nach einem der Ansprüche 1 bis 4, wobei das Ermitteln der Stellgröße anhand eines funktionalen Zusammenhang und/oder anhand einer Look-up-Tabelle durchgeführt wird.

6. Verfahren nach Anspruch 1 bis 5, wobei der Regelungswert mit Hilfe einer PI-Regelung ermittelt wird.

7. Verfahren nach einem der Ansprüche 1 bis 6, wobei die Stellgröße mit einem oder mehreren Adaptionswerten beaufschlagt wird.

8. Verfahren nach Anspruch 7, wobei der Adaptionswert in einem Adaptionsverf ahren abhängig von der Zulauf-Weiße, der Akzept-Weiße und/oder den Parametern ermittelt wird.

9. Verfahren nach Anspruch 8, wobei die Adaption durchgeführt wird, indem ein Offset zwischen dem Sollwert der Akzept-Weiße und der gemessenen Akzept-Weiße aufintegriert wird und zur Stellgröße addiert wird.

10. Deinking-Anlage mit einer Flotationszelle (20) zur Druckfarben-Entfernung,
mit einer Zuleitung (21), um eine Faserstoffsuspension in die Flotationszelle zu leiten,
mit einer Akzeptleitung (26), um die Faserstoffsuspension aus der Flotationszelle zu leiten,
mit einer Schaumrinne zum Aufnehmen von Schaum, der durch das Austragen von Druckfarbenpartikel aus der Faserstoffsuspension mit Hilfe von Gasblasen entsteht, wobei die Menge des abgeführten Schaums einstellbar ist,
mit einem Zulauf-Weiße-Sensor (24), um die Zulauf-Weiße der Faserstoffsuspension zu messen,
mit einer Steuereinheit (22), um eine Stellgröße (SRN) als Funktion der gemessenen Zulauf-Weiße und eines vorgegebenen Sollwertes für eine Akzept-Weiße der abgeführten Faserstoffsuspension zu ermitteln,
mit einem Akzept-Weiße-Sensor (29), um die Akzept-Weiße der abgeführten Faserstoffsuspension zu messen,
mit einer Weiße-Regelungseinheit (28), um einen Regelungswert abhängig von dem Sollwert der Akzept-Weiße und der gemessenen Akzept-Weiße zu generieren und um die Stellgröße mit dem Regelungswert zu beaufschlagen, wobei die Steuereinheit (22) die Menge des abgeführten Schaums abhängig von der mit dem Regelungswert beaufschlagten Stellgröße einstellt.

11. Deinking-Anlage nach Anspruch 10, wobei ein Sensor (25) vorgesehen ist, um einen oder mehrere Parameter der Faserstoffsuspension zu messen und wobei in der Steuereinheit (22) die Stellgröße als Funktion der Parameter einstellbar ist.

12. Deinking-Anlage nach Anspruch 10 oder 11, wobei die Menge des abgeführten Schaums über das Schaumrinnenniveau einstellbar ist, wobei eine Schaumrinnenniveauregelungseinheit vorgesehen ist, um das Schaumrinnenniveau durch Regelung eines Akzept-Flusses durch die Akzept-Leitung gemäß einem SollSchaumrinnenniveau einzuregeln.

13. Deinking-Anlage nach einem der Ansprüche 10 bis 12, mit einer Adaptionseinheit (30), um einen Adaptionswert abhängig von der Abweichung der Soll-Akzept-Weiße und der gemessenen Akzept-Weiße zu generieren und um die Stellgröße mit dem Adaptionswert zu beaufschlagen.

14. Deinking-Anlage nach Anspruch 13, wobei die Adaptionseinheit so gestaltet ist, um einen Adaptionswert zu generieren, indem ein Offset zwischen dem Sollwert der Akzept-Weiße und der gemessenen Akzept-Weiße aufintegriert wird und zur Stellgröße addiert wird.

## Claims

1. Method for regulating whiteness for removal of printing ink in deinking installations, printing ink particles in a fibrous stock suspension being removed in a flotation cell (20) by means of gas bubbles, the removal being carried out by discharging the foam forming into a foam channel, the quantity of foam discharged being adjusted, having the following steps:
- measuring a feed whiteness of the fibrous stock suspension fed in;
- measuring an accepts whiteness of the fibrous stock suspension discharged;
- determining an actuating variable as a function of the feed whiteness and a predefined desired value for an accepts whiteness of the fibrous stock suspension discharged;
- determining a regulation value as a function of the desired value for the accepts whiteness and the measured accepts whiteness of the fibrous stock suspension discharged;
- applying the regulation value to the actuating variable in order to compensate for a deviation of the accepts whiteness from the desired value;
- setting the quantity of foam discharged as a function of the actuating variable.

2. Method according to Claim 1, the quantity of foam discharged being carried out by setting a foam channel level, in particular with the aid of foam channel level regulation.

3. Method according to Claim 2, the foam channel level being set by the control of the quantity of fibrous stock suspension drained off from the flotation cell (20).

4. Method according to one of Claims 1 to 3, parameters of the fibrous stock suspension being measured and the determination of the actuating variable being carried out as a function of the parameters of the fibrous stock suspension in the flotation cell (20).

5. Method according to one of Claims 1 to 4, the determination of the actuating variable being carried out by using a functional relationship and/or by using a lookup table.

6. Method according to Claims 1 to 5, the regulation value being determined with the aid of a PI controller.

7. Method according to one of Claims 1 to 6, the actuating variable having one or more adaptation values applied to it.

8. Method according to Claim 7, the adaptation value being determined in an adaptation method as a function of the feed whiteness, the accepts whiteness and/or the parameters.

9. Method according to Claim 8, the adaptation being carried out by an offset between the desired value of the accepts whiteness and the measured accepts whiteness being integrated and added to the actuating variable.

10. Deinking installation comprising a flotation cell (20) for printing ink removal,
having a feed line (21) in order to lead a fibrous stock suspension into the flotation cell,
having an accepts line (26) in order to lead the fibrous stock suspension out of the flotation cell,
having a foam channel to accommodate foam which is produced as a result of the removal of printing ink particles from the fibrous stock suspension with the aid of gas bubbles, the quantity of foam discharged being adjustable, having a feed whiteness sensor (24) in order to measure the feed whiteness of the fibrous stock suspension,
having a control unit (22) in order to determine an actuating variable (SRN) as a function of the measured feed whiteness and a predefined desired value for an accepts whiteness of the fibrous stock suspension discharged, having an accepts whiteness sensor (29) to measure the accepts whiteness of the fibrous stock suspension discharged,
having a whiteness regulating unit (28) in order to generate a regulation value as a function of the desired value of the accepts whiteness and the measured accepts whiteness and in order to apply the regulation value to the actuating variable, the control unit (22) setting the quantity of foam discharged as a function of the actuating variable to which the regulating value is applied.

11. Deinking installation according to Claim 10, a sensor (25) being provided in order to measure one or more parameters of the fibrous stock suspension and it being possible for the actuating variable to be adjusted in the control unit (22) as a function of the parameters.

12. Deinking installation according to Claim 10 or 11, the quantity of foam discharged being adjustable via the foam channel level, a foam channel level regulating unit being provided in order to regulate the foam channel level by regulating an accepts flow through the accepts line in accordance with a desired foam channel level.

13. Deinking installation according to one of Claims 10 to 12, having an adaptation unit (30) in order to generate an adaptation value as a function of the deviation of the desired accepts whiteness and the measured accepts whiteness and in order to apply the adaptation value to the actuating variable.

14. Deinking installation according to Claim 13, the adaptation unit being configured in such a way as to generate an adaptation value by an offset between the desired value of the accepts whiteness and the measured accepts whiteness being integrated and added to the actuating variable.

## Revendications

1. Procédé pour régler la blancheur afin d'éliminer les encres d'imprimerie dans des installations de désencrage, d'après lequel des particules d'encre d'imprimerie dans une suspension fibreuse située dans une cellule de flottation (20) sont expulsées à l'aide de bulles de gaz, d'après lequel l'expulsion est réalisée en évacuant dans un canal de mousse la mousse qui se forme, d'après lequel on règle la quantité de mousse évacuée et qui comprend des étapes suivantes :
- mesurer une blancheur d'apport de la suspension fibreuse acheminée,
- mesurer une blancheur d'acceptation de la suspension fibreuse évacuée,
- déterminer une grandeur de commande comme fonction de la blancheur d'apport et d'une valeur prescrite prédéfinie pour une blancheur d'acceptation de la suspension fibreuse évacuée,
- déterminer une valeur de réglage en fonction de la valeur prescrite pour la blancheur d'acceptation et de la blancheur d'acceptation mesurée de la suspension fibreuse évacuée,
- faire parvenir à la grandeur de commande la valeur de réglage pour compenser un écart de la blancheur d'acceptation par rapport à la valeur prescrite,
- régler la quantité de la mousse évacuée en fonction de la grandeur de commande.

2. Procédé selon la revendication 1, d'après lequel la quantité de la mousse évacuée est obtenue en réglant un niveau de canal de mousse, en particulier à l'aide d'un réglage du niveau du canal de mousse.

3. Procédé selon la revendication 2, d'après lequel le niveau du canal de mousse est réglé en commandant la quantité de suspension fibreuse qui s'écoule de la cellule de flottation (20).

4. Procédé selon l'une des revendications 1 à 3, d'après lequel on mesure des paramètres de la suspension fibreuse et d'après lequel la grandeur de commande est déterminée comme fonction des paramètres de la suspension fibreuse dans la cellule de flottation (20).

5. Procédé selon l'une des revendications 1 à 4, d'après lequel la grandeur de commande est déterminée à l'aide d'une corrélation fonctionnelle et/ou d'une table de conversion.

6. Procédé selon l'une des revendications 1 à 5, d'après lequel la valeur de réglage est déterminée à l'aide d'un réglage proportionnel et intégral.

7. Procédé selon l'une des revendications 1 à 6, d'après lequel on fait parvenir à la grandeur de commande une ou plusieurs valeurs d'adaptation.

8. Procédé selon la revendication 7, d'après lequel la valeur d'adaptation est déterminée selon un procédé d'adaptation en fonction de la blancheur d'apport, de la blancheur d'acceptation et/ou des paramètres.

9. Procédé selon la revendication 8, d'après lequel l'adaptation est réalisée en intégrant un décalage entre la valeur prescrite de la blancheur d'acceptation et la blancheur d'acceptation mesurée et en l'ajoutant à la grandeur de commande.

10. Installation de désencrage équipée d'une cellule de flottation (20) pour éliminer les encres d'imprimerie, comportant
- une conduite d'alimentation (21) pour conduire une suspension fibreuse dans la cellule de flottation,
- une conduite d'acceptation (26) pour faire sortir la suspension fibreuse de la cellule de flottation,
- un canal de mousse pour recevoir la mousse obtenue en expulsant de la suspension fibreuse des particules d'encre d'imprimerie à l'aide de bulles de gaz, la quantité de mousse évacuée pouvant être réglée,
- un capteur de blancheur d'apport (24) pour mesurer la blancheur d'apport de la suspension fibreuse,
- une unité de commande (22) pour déterminer une grandeur de commande (SRN) comme fonction de la blancheur d'apport mesurée et d'une valeur prescrite prédéfinie pour une blancheur d'acceptation de la suspension fibreuse évacuée,
- un capteur de blancheur d'acceptation (29) pour mesurer la blancheur d'acceptation de la suspension fibreuse évacuée,
- une unité de réglage de blancheur (28) pour produire une valeur de réglage en fonction de la valeur prescrite de la blancheur d'acceptation et de la blancheur d'acceptation mesurée et pour faire parvenir à la grandeur de commande la valeur de réglage, l'unité de commande (22) réglant la quantité de mousse évacuée en fonction de la grandeur de commande à laquelle est parvenue la valeur de réglage.

11. Installation de désencrage selon la revendication 10, dans laquelle un capteur (25) est prévu pour mesurer un ou plusieurs paramètres de la suspension fibreuse et dans laquelle la grandeur de commande peut être réglée dans l'unité de commande (22) comme fonction des paramètres.

12. Installation de désencrage selon la revendication 10 ou 11, dans laquelle on peut régler par l'intermédiaire du niveau du canal de mousse la quantité de la mousse évacuée, une unité régulatrice du niveau du canal de mousse étant prévue pour régler le niveau du canal de mousse en réglant un courant d'acceptation dans la conduite d'acceptation d'après un niveau prescrit du canal de mousse.

13. Installation de désencrage selon l'une des revendications 10 à 12, comportant une unité d'adaptation (30) pour produire une valeur d'adaptation en fonction de l'écart entre la blancheur d'acceptation prescrite et la blancheur d'acceptation mesurée et pour faire parvenir la valeur d'adaptation à la grandeur de commande.

14. Installation de désencrage selon la revendication 13, dans laquelle l'unité d'adaptation est conçue de manière à produire une valeur d'adaptation en intégrant un décalage entre la valeur prescrite de la blancheur d'acceptation et la blancheur d'acceptation mesurée et en l'ajoutant à la grandeur de commande.
